# EUROPEAN PATENT SPECIFICATION

(11) **EP 0 496 257 B1**
(45) Date of publication and mention of the grant of the patent: **24.07.1996**
(21) Application number: 92100561.7
(22) Date of filing: 15.01.1992
(51) Int. Cl.: C08L 69/00, C08L 67/02

(54) **Polymer composition comprising a branched polycarbonate and a polyester**
Polymermischung auf Basis eines verzweigten Polycarbonates und eines Polyesters
Composition de polymères à base d'un polycarbonate ramifiée et d'un polyester

(30) Priority: 24.01.1991 JP 22664/91
(43) Date of publication of application: 29.07.1992
(73) Proprietor: IDEMITSU PETROCHEMICAL CO., LTD., Minato-ku, Tokyo (JP)
(72) Inventor: Kozakura, Shiro, Idemitsu Petrochemical Co.,Ltd., Ichihara-shi, Chiba-ken (JP); Kuze, Shigeki, Idemitsu Petrochemical Co.,Ltd., Ichihara-shi, Chiba-ken (JP)
(74) Representative: Türk, Gille, Hrabal, Leifert

(56) References cited:
- EP-A- 0 106 225
- EP-A- 0 120 394
- EP-A- 0 131 196
- EP-A- 0 400 478
- BE-A- 675 110

## Description

### BACKGROUND OF THE INVENTION

### 1. Field of the Invention

The present invention relates to a polycarbonate resin composition, and more particularly to a polycarbonate resin which has an improved fluidability and solvent resistance in addition to the mechanical properties of conventional polycarbonate resin compositions, and is excellent in moldability, particularly in blow moldability.

### 2. Description of the Related Arts

Processes for production of polycarbonate using phloroglucine or trimellitic acid as a branching agent have heretofore been known, as disclosed in for example, Japanese Patent Publication Nos. 17149/1969, and 11733/1985. Use of these branching agents, however, suffers from a disadvantage in that a trace amount of unreacted matter is apt to cause coloring.

In Japanese Patent Application Laid-Open No. 45318/1984, 1,1,1-tris(4-hydroxyphenyl)ethane is proposed to be used as a branching agent. However, the specification of US Patent No. 4,415,723 discloses that the polymer obtained by using this branching agent is colored to pale yellowish green in Comparative Example A, and suggests the use of a branching agent such as 1,1,2-tris(4-hydroxyphenyl)ethane and 1,1,2-tris(4-hydroxyphenyl)propane. Yet the process disclosed in the above US Patent Specification cannot completely solve the problems of coloring.

It is known that when a polycarbonate is branched for blow molding, its impact resistance decreases. Accordingly, development of a branched polycarbonate with high impact resistance had been required.

The present inventors' group had investigated from such points of view, and succeeded in solving the problem of hue to develop a branched polycarbonate suitable for blow molding which have acetone-soluble matter of not more than 3.5% by weight and an improved impact-strength (Japanese Patent Application Laid-Open No. 182524/1991).

### SUMMARY OF THE INVENTION

As a result of present inventors' intensive investigations to further improve moldability and solvent resistance of the above-mentioned branched polycarbonate, it has been found that a polycarbonate resin composition having the desired properties can be obtained by means of blending a prescribed amount of thermoplastic polyester resin with a specified polycarbonate, without impairing the mechanical properties of conventional polycarbonate resin composition.

The present invention has been accomplished based on the above findings. That is, the present invention provides a polycarbonate resin composition comprising (A) 1 to 99% by weight of a branched polycarbonate having a branched nucleus structure derived from a branching agent represented by the general formula (I): 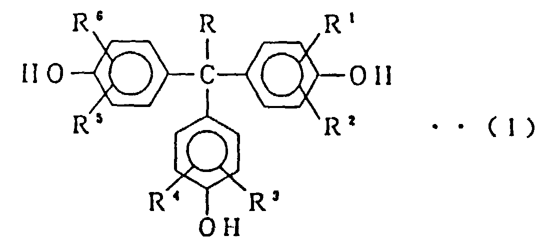 wherein R is a hydrogen atom or an alkyl group having 1 to 5 carbon atoms, and R¹ to R⁶ are hydrogen atoms, alkyl groups having 1 to 5 carbon atoms or halogen atoms, respectively, a viscosity average molecular weight of 15,000 to 40,000, and an acetone soluble matter of not more than 3.5% by weight, and (B) 99 to 1% by weight of a thermoplastic polyester resin.

### DESCRIPTION OF THE PREFERRED EMBODIMENTS

The branched polycarbonate of Component (A) of the present invention has a branched nucleus structure derived from a branching agent represented by the general formula (I): 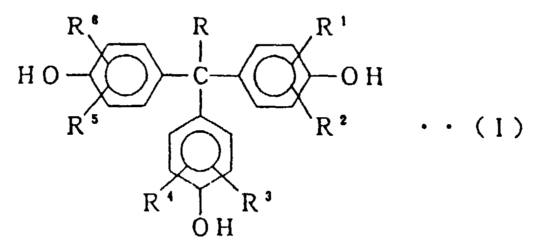 wherein R is a hydrogen atom, an alkyl group having 1 to 5 carbon atoms, such as methyl group, ethyl group, n-propyl group, n-butyl group, and n-pentyl group; and R¹ to R⁶ are hydrogen atoms, alkyl groups having 1 to 5 carbon atoms (e.g., methyl group, ethyl group, n-propyl group, n-butyl group, and n-pentyl group) or halogen atoms (e.g., chlorine atom, bromine atom, and fluorine atom).

The embodiments of the branching agent of the general formula (I) include
1,1,1-tris(4-hydroxyphenyl)methane;
1,1,1-tris(4-hydroxyphenyl)ethane;
1,1,1-tris(4-hydroxyphenyl)propane;
1,1,1-tris(2-methyl-4-hydroxyphenyl)methane;
1,1,1-tris(2-methyl-4-hydroxyphenyl)ethane;
1,1,1-tris(3-methyl-4-hydroxyphenyl)methane;
1,1,1-tris(3-methyl-4-hydroxyphenyl)ethane;
1,1,1-tris(3,5-dimethyl-4-hydroxyphenyl)methane;
1,1,1-tris(3,5-dimethyl-4-hydroxyphenyl)ethane;
1,1,1-tris(3-chloro-4-hydroxyphenyl)methane;
1,1,1-tris(3-chloro-4-hydroxyphenyl)ethane;
1,1,1-tris(3,5-dichloro-4-hydroxyphenyl)methane;
1,1,1-tris(3,5-dichloro-4-hydroxyphenyl)ethane;
1,1,1-tris(3-bromo-4-hydroxyphenyl)methane;
1,1,1-tris(3-bromo-4-hydroxyphenyl)ethane;
1,1,1-tris(3,5-dibromo-4-hydroxyphenyl)methane; and
1,1,1-tris(3,5-dibromo-4-hydroxyphenyl)ethane.

The above branched polycarbonate posesses the branched nucleus structure derived from a branching agent represented by the above-mentioned general formula (I), and specifically represented by the following formula: 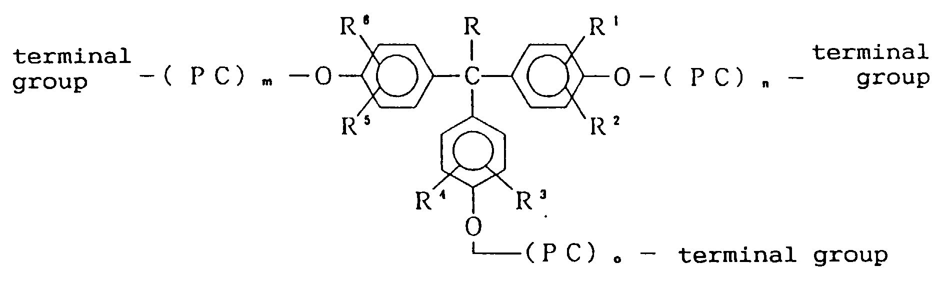 wherein m, n and o are integers, and PC represents a polycarbonate moiety.

PC represents, when bisphenol A is used as starting material component, for instance, a repeating unit of the following formula:

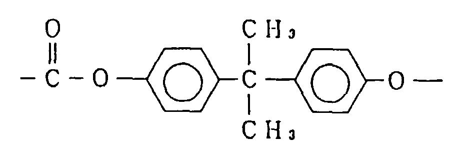

The branched polycarbonate of Component (A) has a specified branched nucleus structure as described above, and a viscosity average molecular weight of 15,000 to 40,000. If the viscosity average molecular weight is less than 15,000, impact resistance of the resulting composition is low, while if it is in excess of 40,000, moldability of the composition results to be poor.

In the above branched polycarbonate, the portion of acetone soluble matter is preferably not more than 3.5% by weight. If the portion of acetone-soluble matter exceeds 3.5% by weight, impact resistance of the composition becomes to be markedly low. The acetone-soluble matter therein refers to a component extracted from the objective polycarbonate by Soxhlet extraction using acetone as a solvent.

Above-mentioned branched polycarbonate can be produced according to various processes. For example, the branched polycarbonate can be efficiently produced by a process disclosed in Japanese Patent Application Laid-Open No. 182524/1991, which comprises reacting (i) a polycarbonate oligomer derived from aromatic dihydric phenols, a branching agent represented by the general formula (I), and phosgene, (ii) aromatic dihydric phenols, and (iii) a terminal stopper while stirring in such a way that a reaction mixture containing them is under a turbulent flow condition, and adding aqueous alkali solution at the point where the viscosity of the reaction mixture rises and, at the same time, reacting the reaction mixture under a laminar flow condition.

The branched polycarbonate can also be produced by reacting (i) a polycarbonate oligomer derived from aromatic dihydric phenols and phosgene, (ii) aromatic dihydric phenols, (iii) a branching agent represented by the general formula (I), and (iv) a terminal stopper while stirring so that a reaction mixture containing them is under a turbulent flow condition, and adding aqueous alkali solution at the point where the viscosity of the reaction mixture increases and, at the same time, reacting the reaction mixture under a laminar flow condition.

As a thermoplastic polyester resin as Component (B) of the present invention, various ones can be used. As the preferred examples, a polyester resin obtained by polymerization of a bifunctional carboxylic acid component and an alkylene glycol component is suggested.

Examples of bifunctional carboxylic acid components and alkylene glycol components are as follows. Bifunctional carboxylic acid components include aromatic dicarboxylic acids such as terephthalic acid, isophthalic acid, and naphthalene dicarboxylic acid. Among these dicarboxylic acids, terephthalic acid is preferred. Other bifunctional carboxylic acid components can also be used in combination so long as the effect of the present invention is not impaired. Typical examples of the other bifunctional carboxylic acid are aliphatic dicarboxylic acids such as oxalic acid, malonic acid, adipic acid, suberic acid, azelaic acid, sebacic acid, and decanedicarboxylic acid, and ester forming derivatives thereof. The proportion of the dicarboxylic acid component other than aromatic dicarboxylic acids is preferably 20% or less of the total dicarboxylic acids.

The alkylene glycol component is not critical, but specifically aliphatic diols having 2 to 15 carbon atoms such as ethylene glycol, propylene-1,2-glycol, propylene-1,3-glycol, butylene-1,4-glycol, butylene-2,3-glycol, hexane-1,6-diol, octane-1,8-diol, neopentyl glycol, and decane-1,10-diol can be used. Among these diols, ethylene glycol and butylene glycol are preferred.

As the polyester resins, particularly preferred ones are polyethylene terephthalate and polybutylene terephthalate.

The thermoplastic polyester resin as component (B) can be prepared by a conventional method in the presence or absence of a polycondensation catalyst containing titanium, germanium, and antimony. For example, polyethylene terephthalate can be prepared by the reaction comprising two steps. At the first step, terephthalic acid and ethylene glycol are esterified, or a lower alkyl ester of terephthalic acid such as dimethyl terephthalate and ethylene glycol are transesterified to obtain a glycol ester of terephthalic acid and/or a low polymer thereof. At the second step, that is, polymerization reaction step, the glycol ester and/or a low polymer thereof are further polymerized to give a polymer having a high polymerization degree.

In the composition of the present invention, the proportion of the branched polycarbonate as Component (A) is 1 to 99% by weight, preferably 30 to 98% by weight, to the total amount of Components (A) and (B). The thermoplastic polyester resin as Component (B) is incorporated in a proportion of 99 to 1% by weight, preferably 70 to 2% by weight. If the proportion of the branched polycarbonate exceeds 99% by weight, the resulting composition is not improved sufficiently in fluidability and solvent resistance. On the other hand, if the proportion of the above-mentioned branched polycarbonate is less than 1% by weight, the mechanical strength and the moldability of the composition are lowered, and no effect by branching the polycarbonate is obtained.

In the polycarbonate resin composition of the present invention, various inorganic fillers, additives or other synthetic resins, elastomers can, if necessary, blended so long as the purpose of the present invention is not impaired.

Inorganic fillers blended in order to improve the mechanical strength, the durability, or the increase in quantity of the polycarbonate resin composition include glass fibers (GF), glass beads, glass flakes, carbon black, calcium sulfate, calcium carbonate, calcium silicate, titanium oxide, alumina, silica, asbestos, talc, clay, mica, and quartz powder.

The aforementioned additives include anti-oxidizing agents of hindered phenol type, phosphorus type such as phosphite and phosphate, and amine type; UV absorbers such as benzotriazoles, and benzophenones; external lubricating agents such as aliphatic carboxylates, and paraffines; conventional flame-retardants; mold release agents; antistatic agents; colorants.

As the hindered phenol type anti-oxidizing agents, BHT (2,6-di-tert-butyl-p-cresol), Irganox 1076 and Irganox 1010 (trade name, produced by CIBA-GEIGY CO.), Ethyl 330 (trade name, produced by ETHYL CO.), Sumilizer GM (trade name, produced by SUMITOMO CHEMICAL CO., LTD.) are preferably used.

Examples of the other synthetic resins are polyethylene, polypropylene, polystyrene, acrylonitrile-styrene (AS) resin, acrylonitrile-butadiene-styrene (ABS) resin, polymethyl methacrylate, and polycarbonates other than the above-mentioned branched polycarbonate. Examples of elastomers are isobutylene-isoprene rubber, styrene-butadiene rubber, ethylene-propylene rubber, and acrylic elastomer.

The polycarbonate resin composition of the present invention can be prepared by blending the above-mentioned components and kneading them. Blending and kneading can be conducted by a conventional method with the use of a ribbon blender, a Henschel mixer, a Bunbury mixer, a drum tumbler, a single screw extruder, a twin screw extruder, a co-kneader, and a multiple screw extruder. The Kneading is appropriately conducted at a heating temperature usually in the range of 250 to 300°C.

The polycarbonate resin composition thus obtained can be molded by various conventional molding methods such as injection molding, hollow molding, extrusion molding, compression molding, calender molding, and rotary molding to prepare molded products such as a bumper and other parts for automobiles, molded products for home electrical appliances, etc. The polycarbonate resin composition is suited particularly for blow molding and extrusion molding, and is excellent in vacuum moldability, hollow moldability, and heat bending moldability in the form of sheet or film.

As described above, according to the present invention, a polycarbonate resin composition excellent in fluidability and solvent resistance, and also in moldability, while posessing the mechanical properties of the original polycarbonate can be obtained. The above-mentioned polycarbonate is particularly suitable for blow molding. Accordingly, blow molding products made from the polycarbonate resin composition of the present invention has a markedly improved mechanical properties and solvent resistance, compared with the conventional ones. Therefore, the polycarbonate resin composition of the present invention is effectively utilized for various molding products (e.g., industrial materials for automobiles, home electric appliances, and office automation appliances), particularly as the material for blow molding.

The present invention will be explained in greater detail with reference to the following examples and comparative examples.

### Reference Example

### (1) Synthesis of Polycarbonate Oligomer A

60 kg of bisphenol A was dissolved in 400 L (L=liter) of a 5% aqueous sodium hydroxide solution to prepare an aqueous sodium hydroxide solution of bisphenol A.

Subsequently, the aqueous sodium hydroxide solution of bisphenol A maintained at room temperature was introduced into a tubular reactor with an inner diameter of 10 mm and tube length of 10 m through an orifice plate at a flow rate of 138 L /hr, and methylene chloride was introduced therein at a flow rate of 69 L /hr, and phosgene was blown thereinto in parallel at a flow rate of 10.7 kg/hr to continuously react them for 3 hours. The tubular reactor used herein was a double tube, and the discharge temperature of the reaction solution was maintained at 25°C by passing cooling water in the jacket section.

The discharged liquid (the reaction solution) was adjusted to pH 10 to 11. The reaction solution thus obtained was allowed to stand, and thus the aqueous layer was separated and removed to obtain 220 L of the methylene chloride layer. Further, 170 L of methylene chloride was added to the methylene chloride layer, and the resulting mixture was thoroughly stirred. The product thus obtained was used as the polycarbonate oligomer A (concentration : 317 g/ L). The degree of polymerization of the polycarbonate oligomer thus obtained was 3 to 4.

### (2) Synthesis of Polycarbonate Oligomer B

60 kg of bisphenol A and 0.58 kg of 1,1,1-tris(4-hydroxyphenyl)ethane were dissolved in 400 L of a 5% aqueous sodium hydroxide solution to prepare an aqueous sodium hydroxide solution.

Thereafter, in the same manner as in (1) above, a polycarbonate oligomer (Polycarbonate Oligomer B) with a concentration of 321 g/ L was obtained.

### Preparation Example 1 (Preparation of Polycarbonate)

3.39 L of methylene chloride was added to 5.61 L of Polycarbonate Oligomer B to prepare Solution I.

Separately, 173.4 g of sodium hydroxide and 482.9 g of bisphenol A were dissolved in 2.9 L of water to prepare Solution II.

The above Solution I and Solution II were mixed, 0.856 g of triethylamine as catalyst and 37.6 g of p-tert-butylphenol as a terminal stopper were added thereto, and the mixture was stirred in a turbulent flow condition for 10 minutes at 600 rpm.

Thereafter, 167 ml of an aqueous sodium hydroxide solution (concentration : 48% by weight) was added, and the resulting mixture was reacted while stirring under a laminar flow condition for 60 minutes at 200 rpm.

After the reaction was completed, 5 L of water and 5 L of methylene chloride were added, and the mixture was separated into a methylene chloride layer and an aqueous layer. The methylene chloride layer was alkali-washed with a 0.01N aqueous sodium hydroxide solution, and further acid-washed with 0.1N hydrochloric acid.

Then, by washing with water, methylene chloride was removed to obtain polycarbonate as a polymer in flake form. The acetone-soluble matter of the flake-form polymer obtained was measured by Soxhlet extraction over 8 hours. The viscosity average molecular weight of the resulting polycarbonate was 2.7 x 10⁴. The polycarbonate thus obtained is referred to as A-1.

### Preparation Example 2 (Preparation of Polycarbonate)

To 5.68 L of Polycarbonate Oligomer A, 3.32 L of methylene chloride was added to prepare Solution III.

Solution III and Solution II used in Preparation Example 1 were mixed, 0.856 g of triethylamine as a catalyst, 37.6 g of p-tert-butylphenol as a terminal stopper and 15.0 g of 1,1,1-tris(4-hydroxyphenyl)ethane as a branching agent were added thereto, and the mixture were stirred under a turbulent flow condition for 10 minutes at 600 rpm.

Then, 167 ml of an aqueous sodium hydroxide solution (concentration : 48% by weight) was added thereto, and the reaction was conducted by stirring under a laminar flow condition for 60 minutes at 200 rpm.

When the reaction was completed, 5 L of water and 5 L of methylene chloride were added thereto, and a methylene chloride layer and an aqueous layer were separated. The methylene chloride layer was alkali-washed with a 0.01N aqueous sodium hydroxide solution, and then acid-washed with 0.1N hydrochloric acid.

Then, by washing with water, the methylene chloride was removed away, and a polymer in flake, that is, polycarbonate was obtained. The viscosity average molecular weight of the resulting polycarbonate was 2.7 x 10⁴. This polycarbonate is referred to as A-2.

### Preparation Example 3 (Preparation of Polycarbonate)

The procedure of Preparation Example 1 was repeated except that 53.2 g of p-cumylphenol was used in place of 37.6 g of p-tert-butylphenol. The viscosity average molecular weight of the resulting polycarbonate was 2.7 x 10⁴. This polycarbonate is referred to as A-3.

### Preparation Example 4 (Preparation of Polycarbonate)

The procedure of Preparation Example 1 was repeated except that 45.5 g of p-tert-butylphenol was used. The viscosity average molecular weight of the resulting polycarbonate was 2.1 x 10⁴. This polycarbonate is referred to as A-4.

### Examples 1 to 11 and Comparative Examples 1 to 5

Each prescribed amount of polycarbonate, thermoplastic polyester resin and other additives was dried, and chip blended, then supplied to an extruder to be kneaded at 270°C, and pelletized. Further, the resulting pellet was dried at 120°C for 6 hours, and injection-molded at a die temperature of 80°C and a molding temperature of 270°C to obtain a test piece.

The pellet was measured on melting properties (flow value, MIR, swell ratio, and melting intensity), and the test piece was measured on tensile strength and solvent resistance. The results are shown in Table 1-1 to Table 1-4.

**Table 1-1**

| | Polycarbonate | | Thermoplastic Polyester Resin | |
|---|---|---|---|---|
| | Kind | Ratio by Weight (wt%) | Kind | Ratio by Weight (wt%) |
| Example 1 | A-1 | 90 | PET*² | 10 |
| Example 2 | A-2 | 90 | PET*² | 10 |
| Example 3 | A-3 | 90 | PET*² | 10 |
| Example 4 | A-1 | 70 | PET*² | 30 |
| Example 5 | A-1 | 50 | PET*² | 50 |
| Example 6 | A-1 | 30 | PET*² | 70 |
| Example 7 | A-3 | 30 | PET*² | 70 |
| Example 8 | A-1 | 70 | PBT*³ | 30 |
| Example 9 | A-1 | 30 | PBT*³ | 70 |
| Example 10 | A-4 | 90 | PET*² | 10 |
| Example 11 | A-1 | 95 | PET*² | 5 |

| | | | | |
|---|---|---|---|---|
| *1 Toughlon A-2700 (polycarbonate produced from bisphenol A) manufactured by Idemitsu Petrochemical Co., Ltd. *2 Dianite MA523 (polyethylene terephthalate, intrinsic viscosity : 0.73 dl/g) manufactured by Mitsubishi Rayon Co., Ltd. | | | | |
| *3 Dulanex 2002 (polybutylene terephthalate, intrinsic viscosity : 1.06 dl/g), manufactured by Polyplastic Co., Ltd. | | | | |

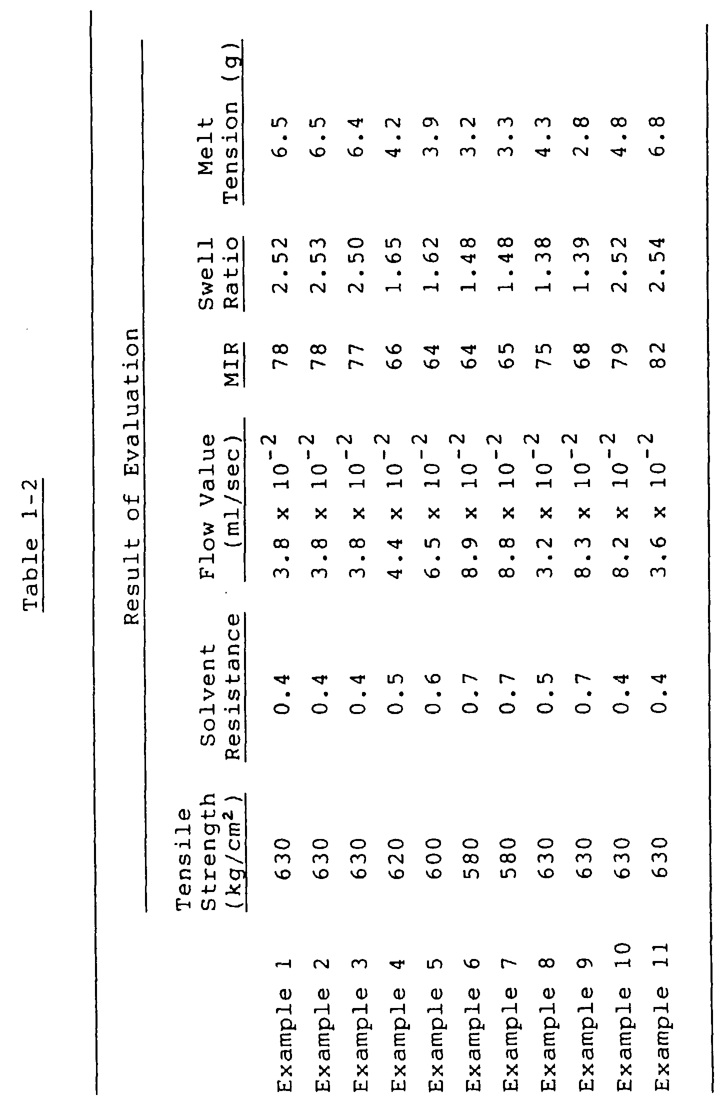

**Table 1-3**

| | Polycarbonate | | Thermoplastic Polyester Resin | |
|---|---|---|---|---|
| | Kind | Ratio by Weight (wt%) | Kind | Ratio by Weight (wt%) |
| Comparative Example 1 | A-1 | 100 | - | - |
| Comparative Example 2 | B-1 | 100 | - | - |
| Comparative Example 3 | B-1 | 70 | PET | 30 |
| Comparative Example 4 | B-1 | 70 | PBT | 30 |
| Comparative Example 5 | B-2*⁴ | 90 | PBT | 10 |

| | | | | |
|---|---|---|---|---|
| *4 Toughlon A2200 (polycarbonate produced from bisphenol A) manufactured by Idemitsu Petrochemical Co., Ltd. | | | | |

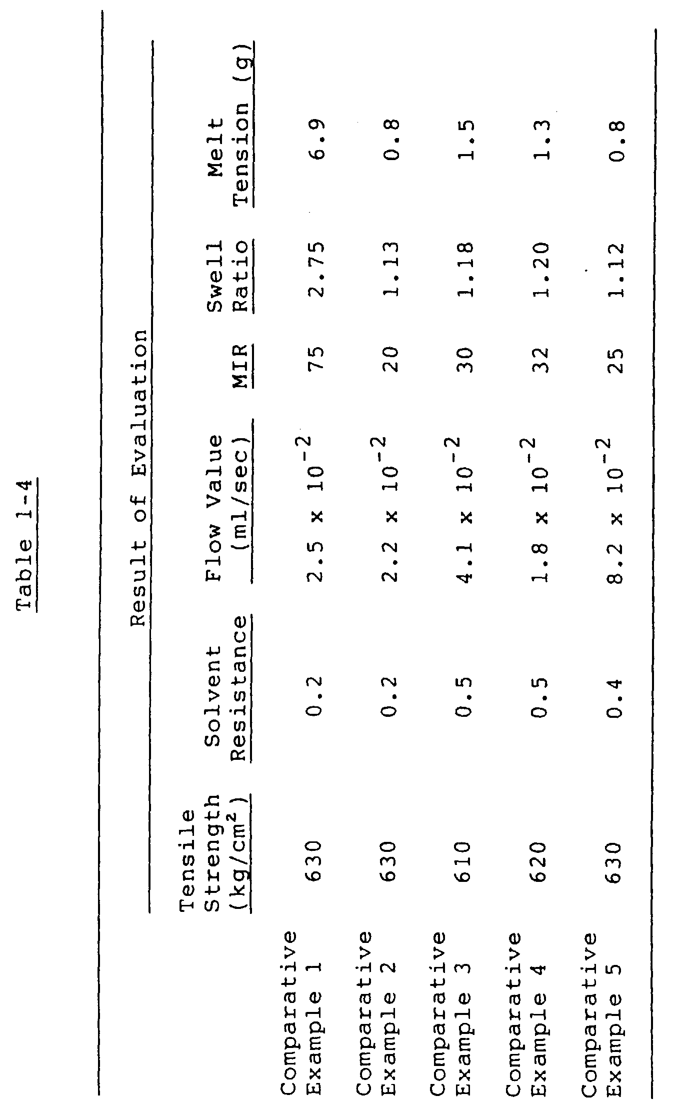

Conditions of measuring melt properties, tensile strength, and solvent resistance are as follows.

### 1) Flow Value

Measured according to JIS K-7210.

### 2) MIR (Index for blow molding. Desired value is 50 or higher.)

Melt index ratio (MI_{11 kg}/MI₃₂₅ g). Measured at 280°C.

### 3) Swell ratio (indication of blow molding and the like. Desired value is 1.2 or higher.)

Value obtained by dividing a cross-sectional area of a strand extruded when a load of 11 kg is applied to a molten resin in measurement of melt index, by a cross-sectional area of an orifice.

### 4) Melt Tension (Indication of blow molding and the like.

Desired value is 2 (g) or higher.)

Tension of strand resulted at a tensile rate of 9.42 m/min., Orifice : L/D=8/21 was measured at 280°C.

### 5) Tensile Strength (kg/cm²)

Measured according to JIS K-7113.

### 6) Solvent Resistance

Determined by critical strain in ratio by volume, in a solvent (ratio of composition : toluene/isooctane=40/60), according to the 1/4 oval method described in Nakatsuji et al. "Shikizai" vol. 39, page 455 (1966).

## Claims

1. A polycarbonate resin composition comprising (A) 1 to 99% by weight of a branched polycarbonate having a branched nucleus structure derived from a branching agent represented by the general formula (I): 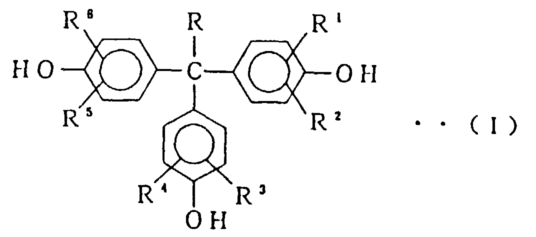 wherein R is a hydrogen atom or an alkyl group having 1 to 5 carbon atoms, and R¹ to R⁶ are hydrogen atoms, alkyl groups having 1 to 5 carbon atoms or halogen atoms, respectively,
a viscosity average molecular weight of 15,000 to 40,000, and an acetone-soluble matter of not more than 3.5% by weight, and (B) 99 to 1% by weight of a thermoplastic polyester resin.

2. The polycarbonate resin composition according to Claim 1 wherein the branched polycarbonate is represented by the formula: 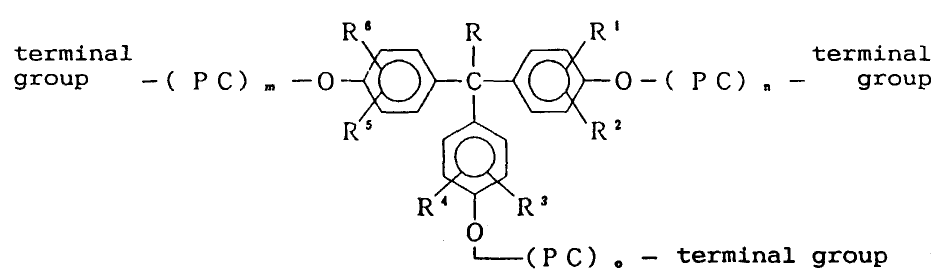 wherein m, n, and o are integers, respectively, and PC indicates polycarbonate moiety.

3. The polycarbonate resin composition according to Claim 2 wherein the polycarbonate is made from bisphenol A.

4. The polycarbonate resin composition according to Claim 2 wherein the polycarbonate has the repeating unit represented by the formula:

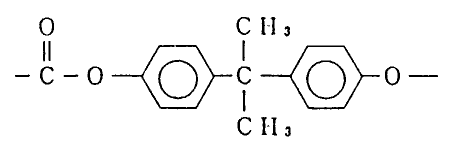

5. The polycarbonate resin composition according to Claim 1 wherein the branching agent is 1,1,1-tris(4-hydroxyphenyl)ethane.

6. The polycarbonate resin composition according to Claim 1 wherein the thermoplastic polyester resin is a polyester resin obtained by polymerizing a bifunctional carboxylic acid and an alkylene glycol.

7. The polycarbonate resin composition according to claim 6 wherein the thermoplastic polyester resin is polyethylene terephthalate.

8. The polycarbonate resin composition according to Claim 6 wherein the thermoplastic polyester resin is polybutylene terephthalate.

9. The polycarbonate resin composition according to Claim 6 wherein the bifunctional carboxylic acid is terephthalic acid.

10. The polycarbonate resin composition according to Claim 6 wherein the alkylene glycol is ethylene glycol.

11. The polycarbonate resin composition according to Claim 6 wherein the alkylene glycol is butylene glycol.

12. The polycarbonate resin composition according to Claim 1 wherein the proportion of the branched polycarbonate as Component (A) is 30 to 98% by weight, and the proportion of the thermoplastic polyester resin as Component (B) is 70 to 2% by weight of the total Component (A) and Component (B).

## Patentansprüche

1. Polycarbonatharz-Zusammensetzung, die umfaßt: (A) 1 bis 99 Gew.-% eines verzweigten Polycarbonats, das eine Verzweigungskernstruktur, die sich von einem durch die allgemeine Formel (I) dargestellten Verzweigungsmittel ableitet,: 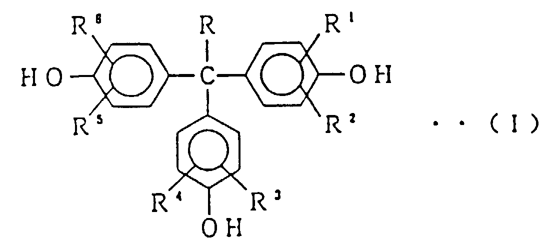 worin R ein Wasserstoffatom oder eine Alkylgruppe mit 1 bis 5 Kohlenstoffatomen ist, und R¹ bis R⁶ Wasserstoffatome, Alkylgruppen mit 1 bis 5 Kohlenstoffatomen und Halogenatome sind,
ein viskositätsmittleres Molekulargewicht von 15000 bis 40000 und einen acetonlöslichen Gehalt von nicht mehr als 3,5 Gew.-% aufweist, und
(B) 99 bis 100 Gew.-% eines thermoplastischen Polyesterharzes.

2. Polycarbonatharz-Zusammensetzung nach Anspruch 1, worin das verzweigte Polycarbonat durch die folgende Formel dargestellt wird: 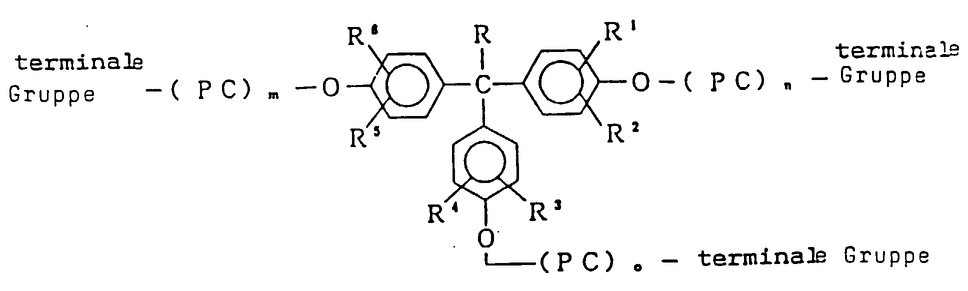 worin m, n, und o ganze Zahlen sind, und PC den Polycarbonatanteil bezeichnet.

3. Polycarbonatharz-Zusammensetzung nach Anspruch 2, worin das Polycarbonat aus Bisphenol-A hergestellt ist.

4. Polycarbonatharz-Zusammensetzung nach Anspruch 2, worin das Polycarbonat die durch die folgende Formel dargestellte Wiederholungseinheit aufweist:

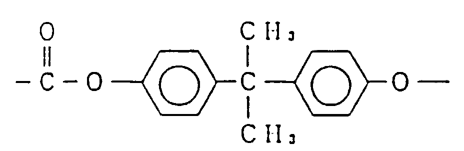

5. Polycarbonatharz-Zusammensetzung nach Anspruch 1, worin das Verzweigungsmittel 1,1,1-Tris(4-hydroxyphenyl)ethan ist.

6. Polycarbonatharz-Zusammensetzung nach Anspruch 1, worin das thermoplastische Polyesterharz ein Polyesterharz ist, erhalten durch Polymerisation einer bifunktionellen Carboxylgruppe und eines Alkylenglycols.

7. Polycarbonatharz-Zusammensetzung nach Anspruch 6, worin das thermoplastische Polyesterharz ein Polyethylenterephthalat ist.

8. Polycarbonatharz-Zusammensetzung nach Anspruch 6, worin das thermoplastische Polyesterharz ein Polybutylenterephthalat ist.

9. Polycarbonatharz-Zusammensetzung nach Anspruch 6, worin die bifunktionelle Carbonsäure Terephthalsäure ist.

10. Polycarbonatharz-Zusammensetzung nach Anspruch 6, worin das Alkylenglycol Ethylenglycol ist.

11. Polycarbonatharz-Zusammensetzung nach Anspruch 6, worin das Alkylenglycol Butylenglycol ist.

12. Polycarbonatharz-Zusammensetzung nach Anspruch 1, worin der Anteil des verzweigten Polycarbnats als Komponente (A) 30 bis 98 Gew.-% beträgt, und der Anteil des thermoplastischen Polyesterharzes als Komponente (B) 70 bis 2 Gew.-% beträgt, bezogen auf die Gesamtheit der Komponente (A) und der Komponente (B).

## Revendications

1. Une composition de résine polycarbonate comportant (A) de 1 à 99% en poids d'un polycarbonate ramifié présentant une structure à noyaux ramifiée, dérivée d'un agent ramifiant représenté par la formule générale (I): 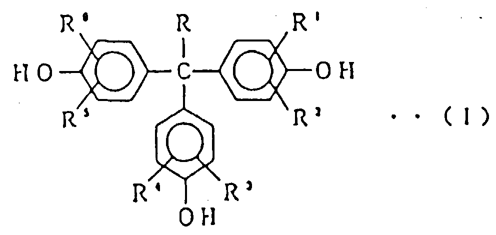 dans laquelle R est un atome d'hydrogène ou un groupe alkyle ayant de 1 à 5 atomes de carbone et R¹ à R⁶ sont des atomes d'hydrogène, des groupes alkyle ayant de 1 à 5 atomes de carbone ou bien des atomes d'halogène, respectivement,
un poids moléculaire moyen déterminé par viscosité de 15.000 à 40.000 et un produit soluble dans l'acétone, ne dépassant pas 3,5% en poids, et (B) de 99 à 1% en poids d'une résine thermoplastique du type polyester.

2. La composition de résine polycarbonate selon la revendication 1, dans laquelle le polycarbonate ramifié est représenté par la formule: 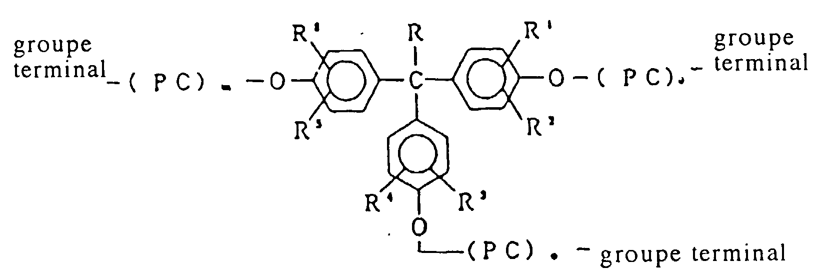 dans laquelle m, n et o sont des nombres entiers, respectivement, et PC indique une partie polycarbonate.

3. La composition de résine polycarbonate selon la revendication 2, dans laquelle le polycarbonate est réalisé à partir du bisphénol A.

4. La composition de résine polycarbonate selon la revendication 2, dans laquelle le polycarbonate présente le motif répétitif représenté par la formule:

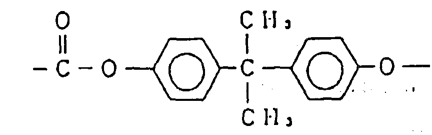

5. La composition de résine polycarbonate selon la revendication 1, dans laquelle l'agent ramifiant est le 1,1,1-tris(4-hydroxyphényl)éthane.

6. La composition de résine polycarbonate selon la revendication 1, dans laquelle la résine thermoplastique à base de polyester est une résine polyester obtenue en polymérisant un acide carboxylique bifonctionnel et un alkylène glycol.

7. La composition de résine polycarbonate selon la revendication 6, dans laquelle la résine polyester thermoplastique est du téréphthalate de polyéthylène.

8. La composition de résine polycarbonate selon la revendication 6, dans laquelle la résine thermoplastique de type polyester est le téréphthalate de polybutylène.

9. La composition de résine polycarbonate selon la revendication 6, dans laquelle l'acide carboxylique bifonctionnel est l'acide téréphtalique.

10. La composition de résine polycarbonate selon la revendication 5, dans laquelle l'alkylène glycol est l'éthylène glycol.

11. La composition de résine polycarbonate selon la revendication 5, dans laquelle l'éthylène glycol est le butylène glycol.

12. La composition de résine polycarbonate selon la revendication 1, dans laquelle la proportion de polycarbonate ramifié en tant que composant (A) est de 30 à 98% en poids, tandis que la proportion de résine thermoplastique de type polyester en tant que composant (B) est de 70 à 2% en poids du composant (A) et du composant (B) au total.
